(19) Europäisches Patentamt

European Patent Office

Office européen des brevets

(11) **EP 1 394 671 A1**

(12) **EUROPEAN PATENT APPLICATION**

(43) Date of publication:
03.03.2004 Bulletin 2004/10

(51) Int Cl.$^7$: **G06F 3/12**

(21) Application number: 03077599.3

(22) Date of filing: 14.08.2003

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: 28.08.2002 EP 02078843

(71) Applicant: **Océ-Technologies B.V.
5914 CC Venlo (NL)**

(72) Inventors:
• **Roosen, Monica M. W. M.
5922 BL Venlo (NL)**

• **Van den Tillaart, Robertus C. W. T. M.
5422 BJ Gemert (NL)**
• **Stiphout, Duncan A. H.
5652 NT Eindhoven (NL)**

(74) Representative:
**van Meeteren, Arend Anthonie et al
Océ-Technologies B.V.,
Corporate Patents,
P.O. Box 101
5900 MA Venlo (NL)**

(54) **Coordinated concurrent printing of print jobs**

(57) Distributed printing of digital print files in a network system including a print service and a plurality of printers adapted for interactive printing, i.e. printing a print file only upon selection thereof and entering of a print command through the local user interface of the printer.

In a first step, the print service receives a print file, stores it and distributes information on the stored print file to a plurality of the printers. In a second step, a print process for the print file is started, locally or remotely, in one of the printers and, while said print process is active, a print process for the same print file is started locally in one or more of the other printers. During the printing, the print service controls the printers to together print the required number of copies.

Fig. 15

EP 1 394 671 A1

**Description**

The invention generally relates to distributed printing, wherein a plurality of printers concurrently processes one print job in order to produce a requested number of copies of a document in a limited time interval.

The invention also relates to a printing system in which the method according to the invention is implemented, and to computer software making a computer perform the method of the invention.

Distributed printing is for instance disclosed in US 5 287 194, describing a system including a plurality of printers and a scheduler. In order to have a print job processed within a desired time interval, the print scheduler determines the job length and inspects the available printers. It selects the printer most suited for the job, and then checks if that printer can complete the job in time. If not, it selects another printer to take over the portion of the job the first printer cannot complete in time. In this way a job may be broken up in several portions each processed by another printer. US 5 995 721 improves this scheduling method by giving an operator the opportunity to interfere with the scheduling process and reject certain printers that he does not want to process the print job, for instance because such printers are too far away from his own location.

Generally, known distributed printing systems are centrally controlled by a scheduler that splits print jobs in portions and sends them to plural printers.

Another approach of quickly printing a number of copies of a print file is concurrent printing in a so-called unchained interactive printing system as is disclosed in applicant's European patent application no. EP 1 229 724 A. In this particular form of printing, print files are submitted for printing, but never printed unless they are selected and started at the console of a printer by an operator. In a networked system comprising a plurality of printers, print jobs are made available for selection and subsequent printing at any of the connected printers. A print job remains selectable until it is specifically removed from the selection list, and can even be selected and started at one printer while it is being processed at another printer. In this way, several printers may be teamed up to print a large number of copies of the print file.

This solution differs from the prior art methods described above in that the printing is not centrally controlled, i.e. the initiative to include a printer into the process is taken at the printer by an operator, and the print job is pulled from its source in the network by the printer instead of being pushed to the printers by the scheduler. An advantage of this approach is, that printers may join the print process at different moments. If, for instance, a printer cannot handle the print job because of a remediable disablement, such as an empty print sheet tray or a paper jam, it may be restored to function and then be brought into the production process that is already running at other printers. This gives a great deal of flexibility.

A drawback of this approach, however, is that the operator, going from one printer to the other, starting the same print job, must specify the number of copies to be made by each printer in order to arrive at the desired total number of copies. Also, when one of the printers suffers a malfunction during the processing, such as running out of print sheets, the desired number of copies will not be completed until the malfunction is remedied.

It is an object of the present invention to improve the method of unchained interactive printing in such a way, that the advantages of such form of printing are kept, while its drawbacks are solved.

Therefore, a method of printing digital print files in a network system including a print service and a plurality of printers, wherein a digital print file includes print image data and metadata specifying job information such as required number of copies to be printed, and wherein a printer is provided with a local memory and a local operator control unit with inputting means and a display and is adapted for permitting interactive printing, i.e. printing a print file only upon selection thereof and entering of a print command through the operator control unit, the method comprising a first step wherein the print service receives print files, stores them in a storage and distributes information on the stored print files, including metadata, to a plurality of the printers, is improved by by a second step of starting a print process for a first print file in one of the printers and, while said print process is active, starting an interactive print process for the first print file in another one of the printers, wherein the print service controls the printers processing said first print file to together print a total number of copies of the first print file, that is equal to the required number of copies specified in the metadata of said print file.

According to the invention, the print service now keeps track of the progress of the printers involved in the production process and, while leaving the initiative of printing copies of the print file to the printers, prevents the team of printers printing more than the requested number of copies. One advantage of this solution is, that a malfunction of any of the involved printers is automatically compensated by the other printers taking over the share of the broken down printer, without any interference of server or the operator.

In an embodiment of the invention, the printers printing a print file together report the finishing of each copy of said first print file to the print service and obtain permission from the print service for starting printing of each new copy of the first print file, and the print service gives said permission with reference to the number of copies contained in the metadata of said first print file. This is an advantageous way of keeping a firm control of the process and yet leave the initiative to the individual printers.

The print service may be implemented as a server connected to the network, but it may also be implemented as a distributed print service process in a system wherein each connected printer is provided with a server process that is logically connected to the server processes in the other printers.

In a further embodiment of the invention, a print file for coordinated concurrent processing in at least two printers, hereinafter to be called: a tandem job, includes a metadata item identifying it as such. When such a print job is started at one of the printers, the print service automatically undertakes to coordinate the printing processes at the printers.

In another embodiment, a print file is not designated as such, but the operator starting a print job may indicate at that moment that the job is to be handled as a tandem job. Upon such indication, the print service further coordinates the production process.

Other embodiments and advantages of the invention will be explained hereinafter by reference to the appended drawings, in which like reference numbers designate corresponding elements. In the drawings,

Fig. 1 shows a general outline of a network system including a plurality of workstations and printers and a Print Server according to the invention;

Fig. 2 is a diagram showing an exemplary printing device;

Fig. 3 is a diagram showing aspects of an Unchained-Printing Server;

Fig. 4 - 5, 7 - 10, 12, 13 show an operator control panel of a printer with a display image in various situations;

Fig. 6 and 11 show an order window of a printer driver in a workstation;

Fig. 14 is a flow diagram of a printer control program for a tandem print job;

Fig. 15 and 16 are flow diagrams of control programs in the server function for a tandem print job.

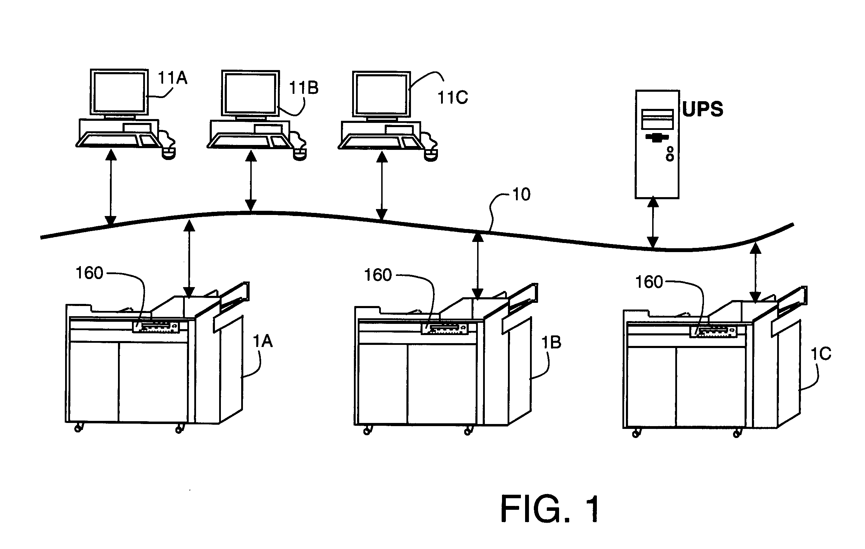

Fig. 1 shows a general outline of a network system including a plurality of workstations 11 A, 11 B, 11 C and a plurality of printers 1A, 1B, 1 C, and an Print Server UPS, all connected to a network 10.

The printers are each equipped with an operator control panel 160 for operation, that is provided with a display and keys and is connected to an operator control unit of the printer. The printers may be embodied as digital copiers, as is the case in this example, but also printers proper provided with a suitable operator control unit and a control panel.

In the following description, the terms "print file" and "print job" are used indifferently. They are meant to relate to the same entity, although stressing different aspects of it, namely the data file aspect and the administrational aspect, respectively.

Within the concept of the present invention, digital data files which are sent to any of the devices 1A, 1B, 1C via the network 10 for printing, are either of a first type or of a second type. Files of the first type are required to be printed directly, i.e. without further action on the part of an operator at the apparatus, while files of the second type are required only to be stored in the memory of the apparatus and not to be printed until an operator explicitly so requests at the apparatus by selecting one via the operator control panel. The type of file involved is apparent from an attribute added to the file.

Processing of a data file of the first type is referred to in this description as automatic printing (AP). Processing of a data file of the second type is referred to as "interactive printing" (IP).

While AP print jobs are submitted to a particular printer and are in principle handled by that printer, IP print jobs are automatically shared by all printers or a predefined group thereof, and are made available for selection and processing at any of these devices such that a user may freely choose one of the printers for printing his print jobs. This will hereinafter be called "unchained-printing". The concepts of interactive printing and unchained printing are described extensively in copending European patent application no. 1 229 724.

Generally, the concept of "unchained printing" includes a server function and a print data storage function, both of them processes which may be implemented in one of several ways and in different physical locations in the system, to be described below.

The general process is as follows.

A print file submitted by a workstation is received by the server function. The server function stores the print data in an associated storage and extracts identification data of the print file (which include the name of the user and the name of the file, the time of arrival of the print file in the system and the print settings, such as the required number of copies) which herein will be called "metadata". Then, the server function sends the metadata to all connected printers.

The printers all include the jobs in their administration systems and make them selectable for printing, even though they may not have the actual print data stored locally. When a user now selects a job at the console of one of the printers, the latter downloads the print data from the storage of the server function and prints the job.

After having printed the job, the printer sends a message to that effect to the server function, which instructs all printers to mark the print job as "printed" in their administration systems and selection lists. Marking a job as "printed" may be effected by displaying a mark (a "tick sign") next to the file name in the list.

When a print job is deleted by a user at the console of any of the printers, that printer sends a message to that effect to the server function, which deletes the print data of that job from storage and instructs all printers to delete the job metadata from their administration systems. A "time-out" function may be included within the server function to automatically erase the print data of a print job from storage and to instruct the printers to delete that print job from their administration systems, after a predetermined time interval since the time of arrival of the print file in the system.

Unchained-printing can be technically implemented in several ways. Three implementation examples are described below. Reference is made to Fig. 1.

In a first implementation, the UPS performs both the server function and the associated storage function. The UPS may be a PC having a high capacity hard disk. In this embodiment, the printer drivers in the workstations 11A, 11B, 11C are programmed to submit IP print jobs to the UPS. The UPS receives and stores all print files, extracts the metadata and sends the metadata to all connected printers. In operation, the dedicated printers 1A, 1B, 1C include the jobs in their administration systems and make them selectable for printing, although they have not stored the actual print data on their disks. When a user now selects a job at the console of one of the printers, the latter downloads the corresponding print data from the UPS and prints the job.

In a second implementation, of which the hardware is similar to that of the first implementation, print files are submitted to a particular printer, at the choice of the user (or as programmed in his printer driver). Upon reception of the print file, the addressed printer stores the file internally, extracts the job metadata and sends them to the UPS, which fulfills the rest of the server function. Thus, the UPS transmits the metadata to the other printers. The other printers all include the jobs in their administration systems and make them selectable for printing. When a user now selects a job at the console of one of the printers, and the print data of that job are not stored locally in that printer, the latter downloads the corresponding print data from the printer that has stored them and prints the job.

In a third implementation, the server function and the associated print data storage are fully distributed. Therefore, a physical server device is not needed. Print files are submitted to one of the printers in the very same way as described above. Upon reception of the print file, the addressed printer stores the file internally, extracts the metadata and sends them to the other printers. The other printers all include the jobs in their administration systems and make them selectable for printing. When a user now selects a job at the console of one of the printers, and the print data of that job are not stored locally in that printer, the latter downloads the print data from the printer that has stored them and prints the job.

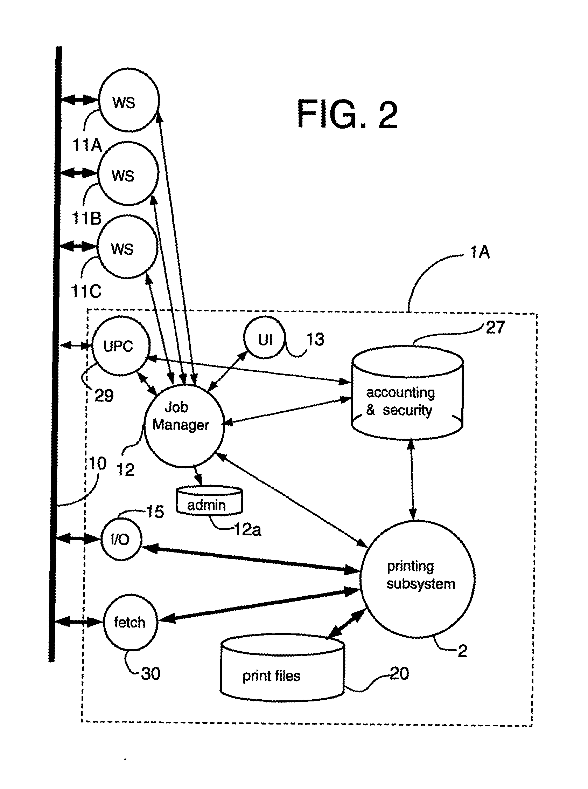

Fig. 2 is a diagram showing the constituent parts of an exemplary printing device, in this example a digital copier, for use with the present invention.

The device 1A comprises a printing subsystem 2 which contains a scanner, a printer, a memory and a dedicated control unit, not shown because this part of the device is conventional and does not embody the present invention.

Further, the device 1A also includes a number of units required to print digital image data which are fed via the local network 10, such as:

- a management unit 12, hereinafter referred to as the: JobManager, which manages the processing processes and also maintains an administration system for all the copying, scanning and print jobs present,
- an administration system (data base) for jobs, maintained by the JobManager 12, is shown as element 12a,
- an operator control unit 13, also termed: UserInterface (UI), provided with an operator control panel 160 on the apparatus housing, with a display and keys for operation of the device 1A,
- an Input/output Handler 15 for receiving and transmitting digital data via the network 10 from the digital environment,
- a storage unit 20 for print files,
- an accounting and security unit 27, which inter alia manages the authorization of users and access codes.
- an Unchained-Printing Client (UPC) 29 connected between the JobManager 12 and the network 10 for communicating with the Unchained-Printing Server (UPS),
- a fetch module 30 for fetching a print data file from the print data storage function, in this case another printer, via the network 10.

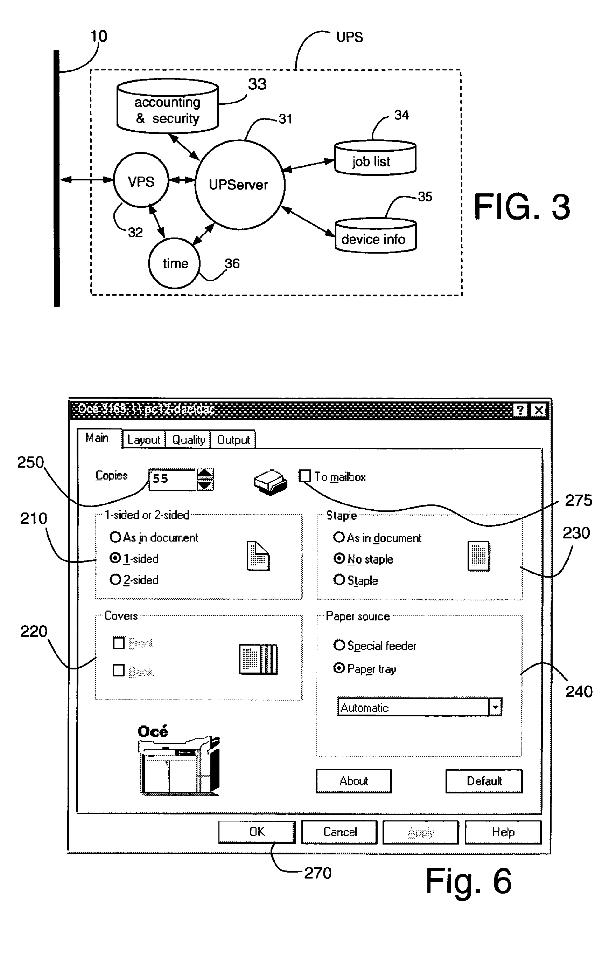

Fig. 3 is a diagram showing aspects of the Unchained-Printing Server UPS. This includes the UPS module proper 31, which controls all processes, and a Virtual Printer Server 32. The UPS module 31 maintains three databases, one (33) including accounting and security information, a.o. permissions of users, one (34) including the list of the metadata of all jobs in the system and one (35) including information on the printers connected. Further, the UPS includes a time server 36 for synchronizing the workstations, the printers and the UPS, e.g. by using the well-known SNTP protocol.

The Virtual Printer Server (VPS) 32 manages the communication between the printers and the UPS module 31. It exchanges messages with the printers when an event occurs at a printer, such receiving, starting, finishing a print job, malfunctions, etc. Further, the VPS 32 senses when:

- a printer goes down
- a printer comes up.

The accounting and security database 33 of the UPS and those of the printers (27) are synchronized in order to assure that they contain the same information. Any changes in permissions and credits are entered by the system administrator in the database of the UPS and are then automatically distributed by the UPS to the corresponding databases in the printers. Also, when a print file of an as yet unknown user arrives at a printer, and the JobManager 12 of that printer extracts the user name and updates its accounting and security database 27, the said JobManager also informs the UPS, which updates its database 33 accordingly and informs the other printers.

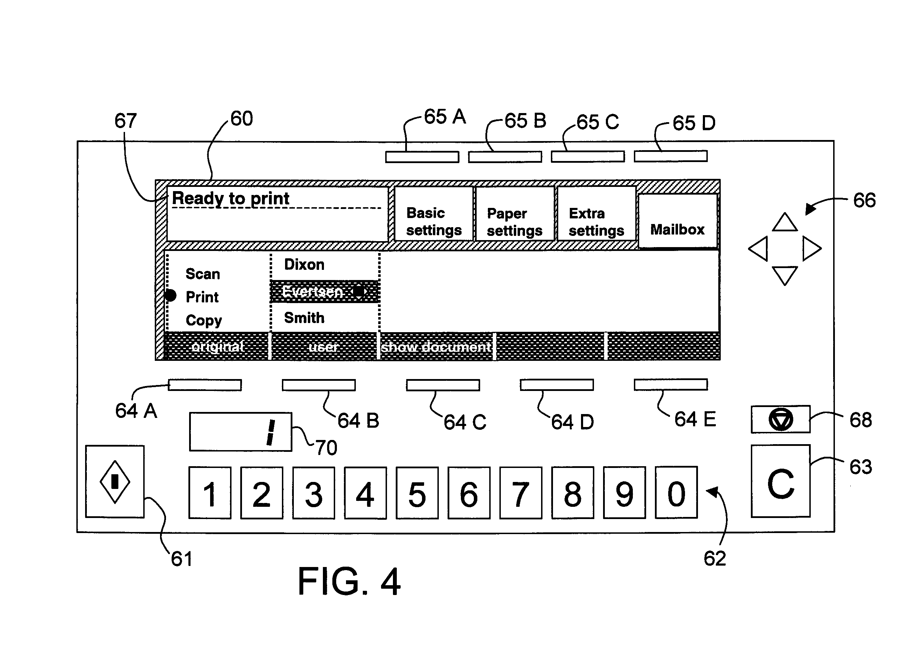

The operator control panel 160 belonging to the operator control unit 13 of a printer is shown in Fig. 4 and includes a display screen 60, such as an LCD display, and a number of keys, namely a start key 61, number keys 62, a correction key 63, a stop key 68, selection keys 64A-E, 65A-D and the key cluster 66A-D. All these elements are connected to the operator control unit 13, which in response to operation of the keys passes signals to the JobManager 12 and which also controls the display screen 60 to display options and messages to the operator.

The selection keys 64A-E are for selecting device functions, which are grouped in sets that can themselves be selected by the keys 65A-D. Captions below the keys 65A-D specify the sets, namely, "Basic settings" such as simplex or duplex, staple, enlargement, "Paper settings" for selecting print sheet properties, and "Extra settings" such as lighter/darker, margin shift, etc. For each function group, a list of alternative settings for a function is shown for selection in a column above each key 64A-E. By actuating a selection key an operator can choose a different setting, e.g. in accordance with a cyclic pattern. The leftmost column is dedicated to the basic device function: "Copy", "Print", or "Scan".

The operator control panel 19 also contains a number display 70 to indicate the number of copies set.

The procedure for handling print files of the second type (for interactive printing) will now be described. This description is applicable to the second embodiment mentioned above (print files submitted to and stored in one of the printers, and metadata distributed via a UPS), except as indicated otherwise. The skilled person will have no difficulty in devising the modifications necessary for the other implementations.

JobManager 12 maintains an administration system 12a in which the identification data of all the data files for printing stored in the storage unit 20 are entered. When a new file is received via the network, then the JobManager 12 extracts the identification data (metadata) thereof and enters them in the administration system 12a in connection with the name of the owner/sender. Further, the JobManager passes the metadata of the print file and a code identifying the printer itself to the UPS via its UPC 29. Also, upon reception of metadata of other print jobs from the UPS, the JobManager 12 enters the same in its administration system 12a.

The UPS receives the metadata of a newly received print file (AP or IP) via Virtual Printer Server 32 and stores them in the job list 34. Then, the UPS sends the metadata and the device identifier code to the other dedicated printers (e.g., 1 B) through the VPS 32. In this way, even a print file of the first type (AP) can also be printed by any of the other connected printers.

When an operator wants to have a specific data file of the second type printed, he must so instruct the printer via the operator control panel 160. First, he must select the function "Print" with key 64A. In reaction, the operator control unit 13 requests the JobManager 12 to pass a list of all the active user names (names of users having at least one print job of the second type in the system). As shown in Fig. 4, the operator control unit displays the user list on the display, in the column above key 64B, whereafter the user can select his name. If the list is too long to be displayed completely, a part of it is shown on the display and scrolling is possible using the star keys 66. Initially, the display focus is on the user who has last submitted a print job to the particular printer (in this example "Evertsen").

It will be understood that the list includes all users having sent jobs to any printer in the system, of which the metadata are known.

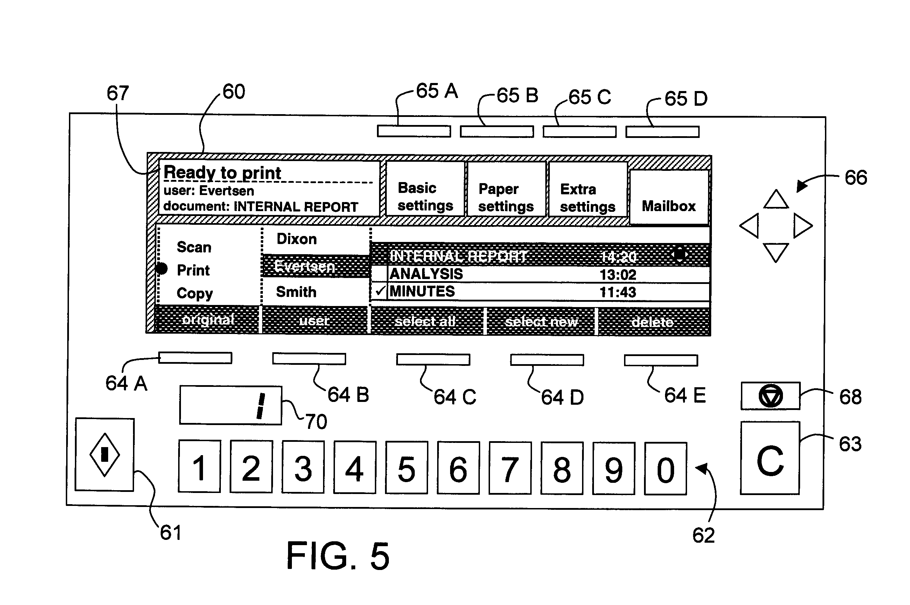

After the user has selected his name, he actuates key 64C to obtain an overview of his own print jobs. In response to this, the JobManager makes up a current list of interactive and automatic print jobs of the current user and passes it through to the operator control unit 13, which displays this list to the user for selection on display 60. The display image is shown in Fig. 5. The submission time of each job is shown at the side of the file name. A "tick" sign is shown at the left of a file name of a file that has been printed already. If the list is too long to be displayed completely, a part of it is shown on the display and scrolling is possible using the star keys 66. Initially, the display focus is on the print job submitted last to the particular printer (in this example "INTERNAL REPORT"). In this embodiment, the keys 64 C-E have functions for file management. Key 64C is for selecting all print jobs of the current user, key 64D is for selecting the newly-arrived print jobs only, and key 64E is for deleting any selected jobs.

In response to selection of a print job, the corresponding print data file is brought out of the storage unit 20 (or fetched from another storage by the fetch module 30), converted to printable data and printed in the printing subsystem 2.

After selection of a print job, the printing process is started by actuating the start key 61.

When a data file has been printed, it remains in principle stored in the storage unit 20 until it is removed by the user himself or the manager of the apparatus. To this end, he gives a command for removal of a selected file. In response to this, the JobManager 12 passes a command to delete the file from the storage unit 20 and it removes the identification data of that file from its administration system 12a. A "time-out" function may be provided to automatically delete a print file after a predetermined time interval.

Although unchained printing is primarily intended for interactive print jobs, automatic print jobs (AP jobs) may also be submitted. They are normally processed by the particular printer to which they have been submitted, unless that printer's JobManager is in the mode (which can be set by an operator having specific privileges) in which it does not accept automatic print jobs. In the latter case, it converts the print file into one of the second kind (IP), and further proceeds as described above.

A printer receiving an automatic print job also reports it to the UPS, which in turn informs the other printers. The other printers then make the job selectable for printing. After being printed, the AP jobs remain stored until they are deleted, either intentionally by a user or automatically.

When a print job has been started at one printer, it remains selectable at the other printers, and it may even be started there while it is still running at the first-mentioned machine. This feature may be used in a reprograhic department, where several printers are placed, for speedy production of documents in large numbers. In general, to profit from this inventive concept, a print file is submitted to an unchained printer server function, in any of the technical implementations of unchained printing explained above, wherein the metadata include, a.o. the number of copies to be printed. Then, an operator starts the print job at several connected printers without bothering about setting a number of copies. These printers parallelly print copies of the print file. The server function keeps track of the progress of the printing processes, and commands the printers to stop at the moment that the total number of copies printed by all involved printers reaches the required number of copies specified in the metadata.

A strong advantage of this concept is, that any disturbances of a print process in an involved printer is automatically compensated by the other involved printers printing more copies. Thus, this procedure is very robust.

Following is a description of technical measures according to the invention for exploiting and facilitating the feature of parallelly finishing a print order by a plurality of printers, further to be called: tandem printing.

In a first embodiment, tandem printing is entirely implemented in the printer server function, in any of the technical implementations of unchained printing explained above. It is thus not necessary to define a print job as a tandem job at the submission site (workstation). A normal print job is submitted to the server function, which makes it selectable at all or at least a plurality of the available printers. Then, an operator selects and starts the print job at several of the printers, stating that he wants the job to be processed as a tandem job, i.e. one with the prespecified total number of copies. Alternatively, if the operator does not start the print job as a tandem job, processing at the different machines is completely independent and the set number of copies is printed at each printer. Also, the set number of copies may be changed at any of the printers (for that printer).

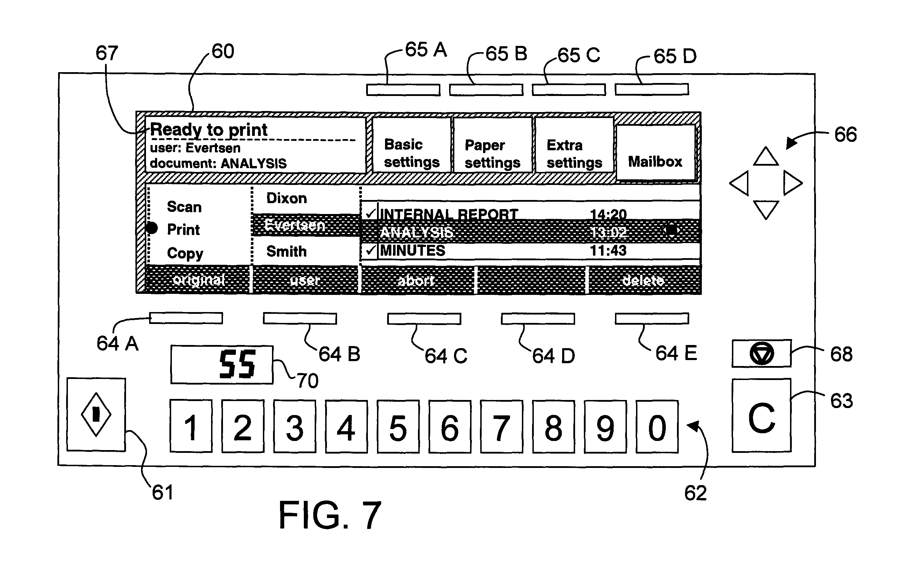

Fig. 6 shows an order window of a printer driver in a workstation 11 A-C. A printer driver is a program for submitting print jobs to a printer. The order window pops up on the workstation display screen when the user clicks on a "Print" symbol in an application window on the screen, and the user can now enter specifications for the print job into the order window, such as: the required number of copies, single or double sided printing, etc.

The order window includes several boxes 210, 220, 230 and 240 with radio-buttons and tick boxes for setting the print specifications, and a number box 250 for the required number of copies, presently having the value "55". A tick box 275 is for defining the print job as an interactive one (a print file of the second type). At the bottom of the order window there are a number of "soft" keys, including a key 270 ("OK"), for starting the actual submission process.

Upon reception of the print file, the server function distributes the metadata of the job to the printers, which make the job available for selection at their local operating consoles, in the way described above.

Fig. 7 depicts the operating panel of one of the printers, in which the relevant print job "ANALYSIS" is shown and has already been selected by an operator. The number display 70 shows the required number of copies programmed in the printer driver. The operator may now start the print job by actuating key 61. He may also change any of the settings of the print job before starting it. If, in this process, he changes the required number of copies, the JobManager 12 of the printer updates the metadata of the job with the new number and communicates the updated metadata to the server function. The server function then communicates the changes to the other printers.

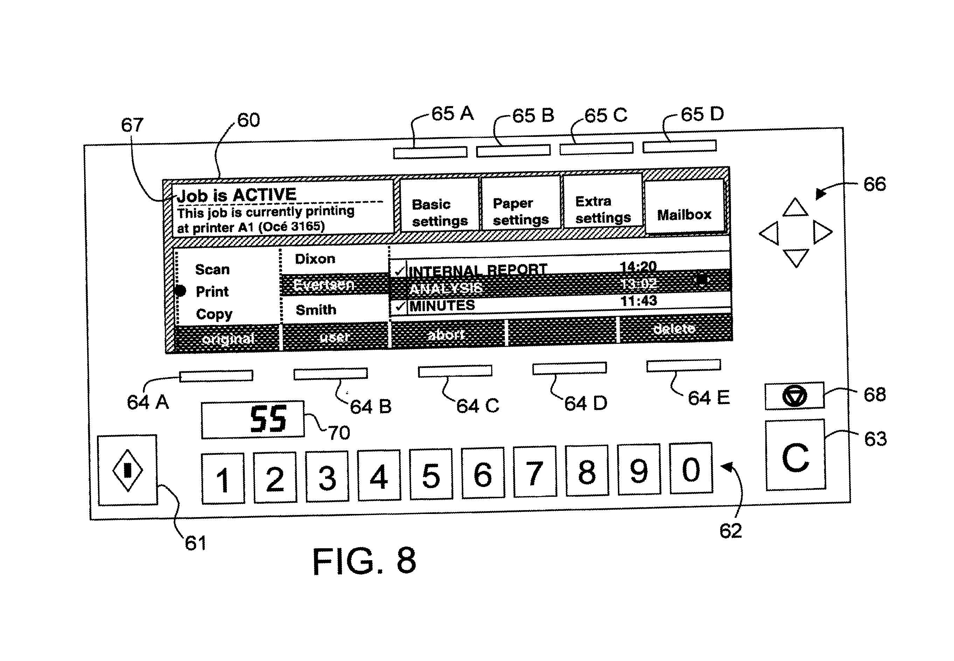

As described above, this print job remains selectable at the other printers and can still be started there as well. Fig. 8 shows the operating panel of a second, other printer, in which the same print job "ANALYSIS" has been selected. The message window 67 now shows a message stating that this job is already active (i.e., is printing) in the first machine.

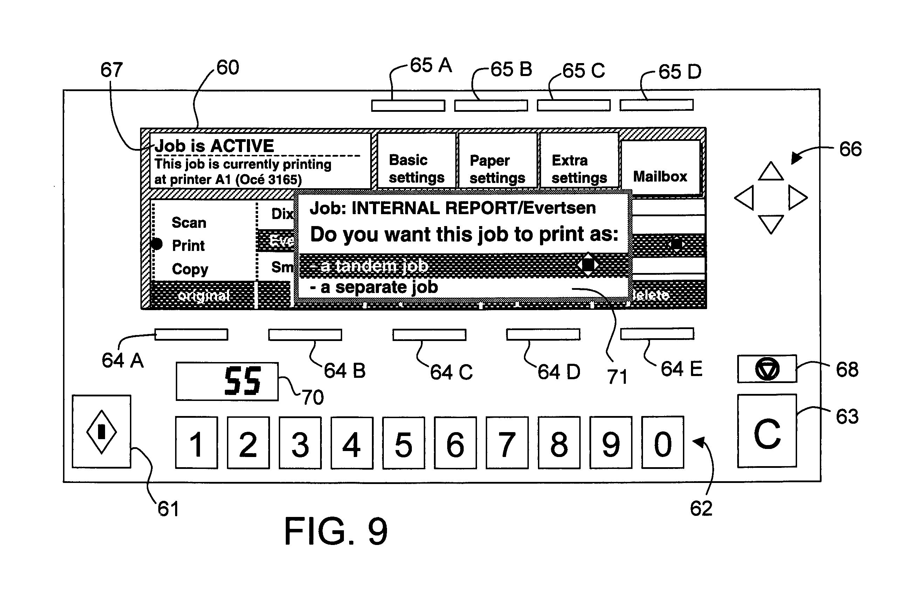

The operator now has two options, as is shown to him in a forced dialog window 71 that appears on the display screen 60 when he actuates the start key 61 (Fig. 9).

The first option is: starting the print job at the second printer independently from the first printer, in which case the job will entirely be printed according to the metadata, in casu, printing the 55 copies specified therein. Also, the operator can now change the settings of the job, overruling the settings specified in the metadata. The cahnged settings are valid for the second printer only.

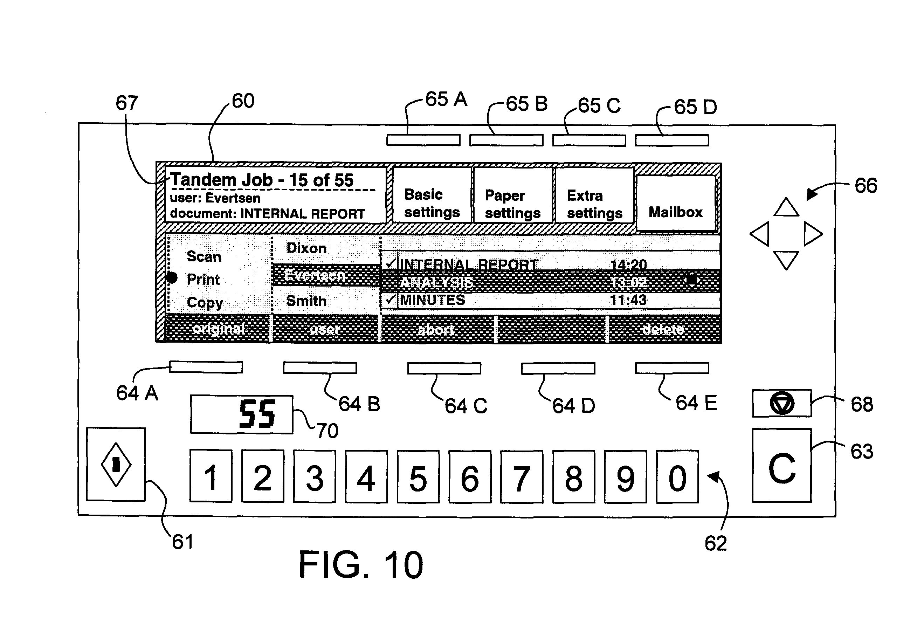

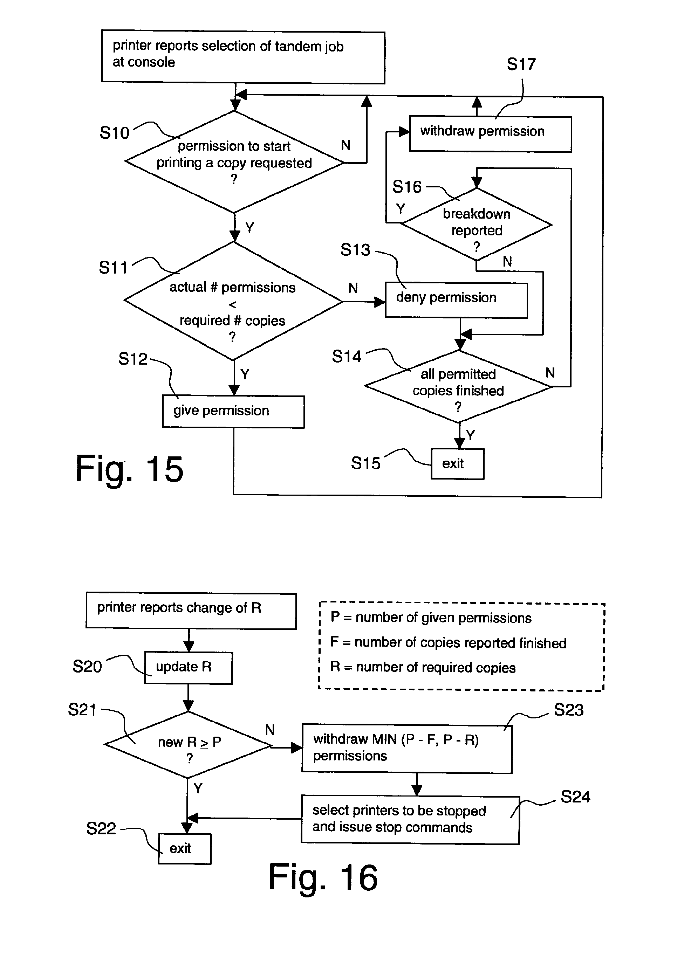

The second option is: starting the print job as a tandem job. In this case, the job is printed in dependence of the print process running at the first printer, and possibly other printers having joined the printing process, under coordination of the server function. Fig. 10 depicts the operating panel in a state of printing the job as a tandem job. The message window 67 now specifies the current copy being printed at that printer, which is a cumulative number for all printers involved in printing the job. In this situation, the print job is printed according to the metadata, which cannot be changed at the second printer. To make this clear, the settings part of the display 60 is grayed. However, the required number of copies may still be changed during the printing, and at any of the printers involved. The procedure for adapting the printing management to a change of the required number of copies will be explained below in connection to Fig. 16.

A second embodiment of tandem printing will now be described. In this embodiment, a print job must be designated as a tandem job in the printer driver, and then the handling of the job is further performed by the printer server function, in any of the technical implementations of unchained printing.

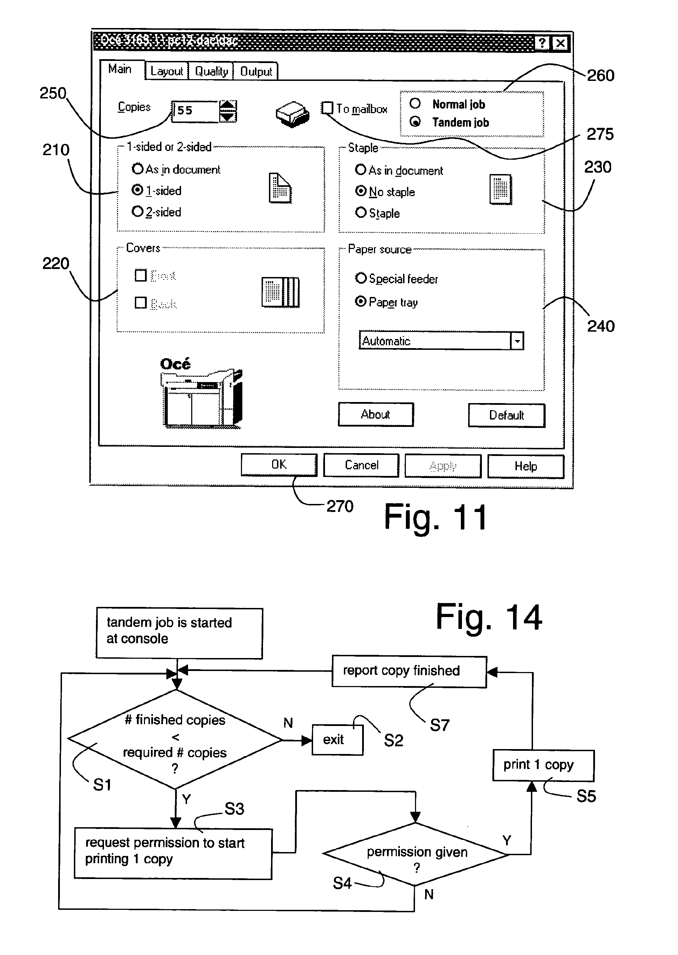

Fig. 11 shows an order window of a printer driver according to the second embodiment mentioned above. In addition to the elements of the printer driver order window shown in Fig. 6, it includes a box 260 with radio buttons in which the print job is defined as either a normal job or a tandem job. If the button "tandem job" is selected, the printer driver sets an appropriate flag in the print file data, that signals the job as such to the print server function.

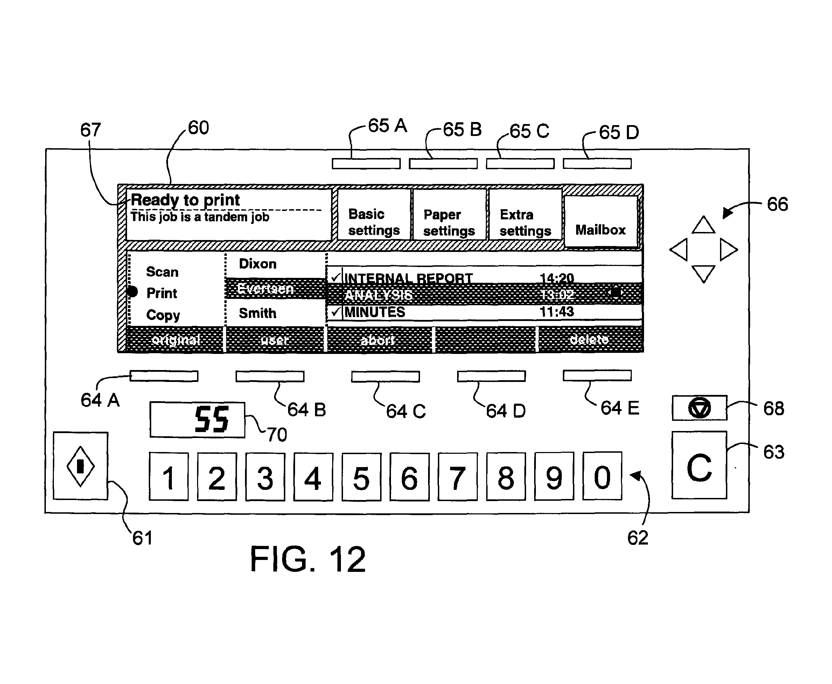

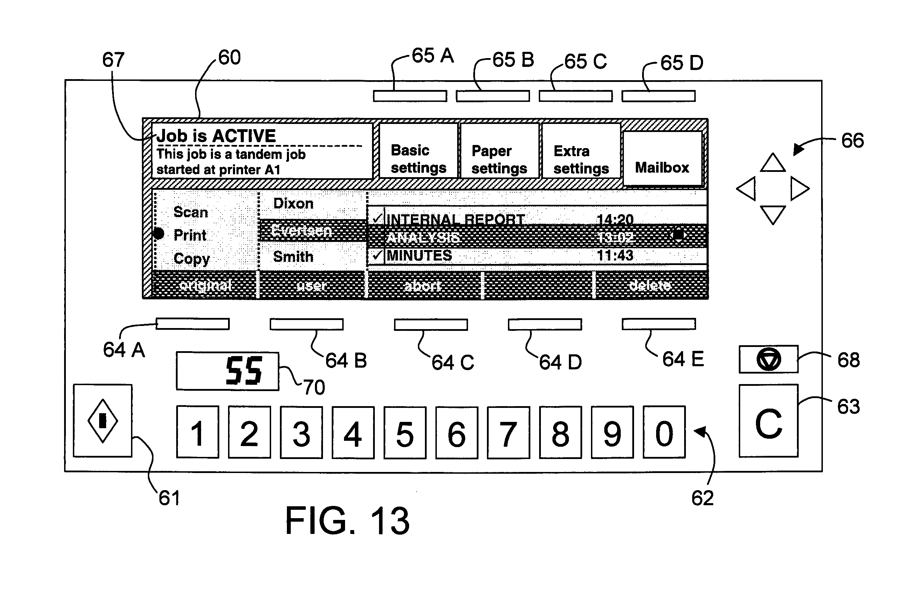

The server function distributes the metadata of a job of this kind to the printers, which make it selectable for printing. When an operator selects the job, and the job has not yet been started at one of the other printers, he is presented with a display image as shown in Fig. 12, wherein the message window 67 states that this is a tandem job. The operator may now start printing the job by actuating the start button 61. Then, when an operator selects the same job at another printer, the display of that printer presents an image as shown in Fig. 13, which states that the job is already active and printing at the first machine (and any other machine printing the job). The operator may now start printing the job and join into the production of the required number of copies, but may not change the settings. Therefore, the settings part of the display image is grayed. However, the required number of copies may still be changed during the printing, and at any of the printers involved. The procedure for adapting the printing management to a change of the required number of copies will be explained below in connection to Fig. 16.

In a variant of the above-described first embodiment of tandem printing, a job is designated a tandem job on submission, but the forced dialogue 71 shown in Fig. 9 is now preset at the value "tandem job". This preset value may then be overruled by the operator selecting the "separate job" option.

In both embodiments described above, it may happen that a printer cannot print a print job that has been selected at its operating panel according to the specifications in the print file, e.g. because it cannot print duplex or because it has run out of staples. In that case, the printer will display a message saying so and advising the operator to resort to another printer that can print the job according to its specifications. A procedure for this is disclosed in EP-A 1 229 724 of the same applicant, and may well be implemented in the printer according to the present invention. In the case of the present invention, since print specifications cannot be altered for a tandem job, the operator may nevertheless start the print job at the machine that is unable to print according to the specifications, and then that printer will print the job "as well as possible".

It may happen that an operator wants to stop a running tandem print job immediately, either on the printer he is present at, or on all printers involved in printing the job. He may do so by pushing the correction key 63 on the control panel 160. In reaction, a forced dialogue appears on the display screen 60, asking if the operator wishes to stop the local print process in that printer only or those in all other involved printers as well, which he may indicate by again pushing the correction key 63 (local process) or pushing the stop key 68 (all printers). In the first case, the printer cycles down and a new forced dialogue appears on the display screen 60, asking if the operator wishes to end the local print process in that printer, which he may acknowledge by actuating the stop key 68, or if he wishes to resume the print process, which he may acknowledge by actuating the start key 61. Before he actuates the start key, the operator may change the job settings, and in particular, he may change the total required number of copies to be made by all printers.

If, in the first forced dialogue, the stop key 68 was pushed, all involved printers cycle down and end their process. Nevertheless, the print file is left in the local storage of the involved printers.

The program running in the JobManager 12 of a printer for communication with the server function during the production of a tandem print job is now described with reference to Fig. 14. This program is started when an operator of the printer starts a tandem print job at the operating panel of that printer (also when that tandem job is already running at another printer). The same program is started when an operator changes a normal print job into a tandem print job by joining in a second printer into the process. In that case, the program starts not only in the printer the operator is operating, but it also takes over in the printer that was printing the job as a normal print job. The last-mentioned normal print job may be an interactive print job, but also an automatic print job as described above.

First (S1), the JobManager 12 checks if the number copies already finished within the group of involved printers (each printer reports finishing a copy of the print job to the community of printers, e.g. by broadcasting) is smaller than the required number of copies specified in the metadata of the job. If this is not the case, the printer does not start printing (S2). If indeed, the number of finished copies is smaller, then the Job-Manager requests the server function permission to start printing one copy of the job (S3). If the server function gives permission (S4), the printer prints one copy (S5), else, it returns to step S1. After finishing the copy, the JobManager reports so to the server function (S7) and returns to step S1. It will be understood that step S7 may be executed slightly before the copy is completely finished, e.g. while the last sheets are still being transported to the output tray, so that no time is lost with requesting a new permission.

The program running in the server function for controlling the production of a tandem print job is now described with reference to Fig. 15. This program is started when a printer reports selection of a tandem print job at the operating panel of that printer (also when that tandem job is already running at another printer, and even also when an operator changes a normal print job into a tandem print job by joining in a second printer into the process).

The server function waits for a printer to request permission for starting printing of one copy of the print job (S10). Then, the server function checks if the actual number of permissions given (also including the number of finished copies of that job printed without permission, in the case that the job was started as a normal job) is smaller than required number of copies specified in the metadata (S11). It is to be understood, that a permission remains valid, even if the associated copy has been printed. If the number of permissions is smaller, the server function gives permission to print one copy to the requesting printer (S12). If not (all required copies have been made or at least started), it denies permission (S13) and checks if all copies for which permission has been given are reported finished (S14). If so, the job is done and the server ends the process (S15). If in step S14 not all permitted copies have been reported finished, the server function checks if a printer breakdown has been reported (S16), because in that case the copy that printer was printing willnever be finished. If no breakdown has been reported, the server returns to step S14, and in doing so enters a waiting loop until all copies have been finished. If in step S16 a printer breakdown is detected, the server function withdraws the permission given to the broken down printer (S17) and returns to step S10. Since the withdrawal of the permission of the broken down printer decreases the number of given permissions, there is now room for another printer to print the associated copy.

Fig. 16 is a diagrammatic representation of the procedure followed by the server function, when an operator changes the required number of copies at the operating panel of any of the active printer during the processing of a tandem print job. The JobManager 12 of the printer reports the changed number to the server function and the other involved printers, e.g. by broadcasting, and in reaction, the server function updates the number in memory (S20). Then, it checks if the new number is greater than or equals the total number of permissions to start printing a copy, having been given at that moment (S21). If so, the procedure is left (S22), because no special action has to be taken. However, if the number of permissions is already greater than the new required number of copies, then the distributed printing process will deliver too many copies, and action has to be taken to limit the number of excessive copies or print sheets. In this case the server function withdraws as many permissions as is necessary to prevent the number of finished copies from surpassing the new required number of copies (S23) if such is still possible. This number is found by calculation according to the following formula:

$$N_W = MIN (P-F, P-R)$$

wherein:

$N_W$ = number of permissions to be withdrawn
P = number of given permissions
F = number of copies reported finished
R = (new) number of required copies.

On the basis of this number, the server function selects printers to be stopped. If not all printers have to be stopped, the server function selects printers having received the most recent permissions and orders them to stop as soon as possible (S24), such that the number of print sheets produced in excess are minimized. Then, the server function exits the procedure (S22).

The above mechanism can also be used for stopping all involved printers at once, e.g. when an error in the document to be printed has been detected. To do so, the required number of copies must be changed to 0 (zero). In reaction, all printers are stopped by the server function. This may also be done from a printer that is not yet involved in the tandem job, simply by selecting the relevant print job, setting the required number of copies to 0 and "starting" the printer by actuating the start key 61.

After a tandem job has been printed, a list of involved printers and the number of copies printed by each of them may be printed on a request made by the operator, for instance by actuating one of the keys 64 A-E designated for the purpose by an appropriate caption on the display screen 60. The server function has all necessary data for drawing up such a list and can easily make it upon request.

Especially for small print jobs and high numbers of copies, there is much communication between the server function and the printers, and network loading is high. This can be lowered by giving permissions for printing a specified number of copies at once, e.g.

blocks of 5 copies.

A special form of a print file is an image or series of images generated by scanning documents in a scanner, such as the scanner of any of the digital copiers used as printers in the description above. In a variant of the present invention, also scanned images are included in the list of print files made available for selection and printing on the connected printers. Such scanned files may be identified by the term "copy job" and an identification of the copier on which the scan file was made and the time of scanning. If an accounting is active, then the account name may be used for identification of the scan file. Such scanned print files are expressly included in the present invention.

The invention being thus described, it will be obvious that the same may be varied in many ways. Such variations and modifications as would be obvious to one skilled in the art are intended to be included within the scope of the following claims.

## Claims

1. A method of printing digital print files in a network system including a print service and a plurality of printers,

   wherein a digital print file includes print image data and metadata specifying job information such as required number of copies to be printed, and

   wherein a printer is provided with a local memory and a local operator control unit with inputting means and a display and is adapted for permitting interactive printing, i.e. printing a print file only upon selection thereof and entering of a print command through the operator control unit,

   the method comprising a first step wherein the print service receives print files, stores them in a storage and distributes information on the stored print files, including metadata, to a plurality of the printers,

   and being **characterized by** a second step of starting a print process for a first print file in one of the printers and, while said print process is active, starting an interactive print process for the first print file in another one of the printers, wherein the print service controls the printers processing said first print file to together print a total number of copies of the first print file, that is equal to the required number of copies specified in the metadata of said print file.

2. The method according to claim 1, wherein said first step comprises:

   - receiving a print file at the print service;
   - storing said print file in a storage;
   - extracting, by the print service, at least part of the metadata of said print file;
   - transmitting, by the print service, said extracted metadata to a plurality of the printers,
   - receiving said metadata by said plural printers and including said metadata in a local file selection mechanism resident in the operator control units of each of said plural printers.

3. The method according to claim 1,

   wherein the printers printing said first print file

   - report the finishing of each copy of said first print file to the print service and
   - obtain permission from the print service for starting printing of each new copy of the first print file, and wherein

   the print service gives said permission with reference to the number of copies contained in the metadata of said first print file.

4. The method of claim 1, wherein the method further comprises

   - in reaction to a selection by an operator at a printer, fetching the print data of the selected print file from the storage and printing the print file.

5. The method of claim 1, further comprising

   - communicating status changes of a print file to all printers which have the associated metadata.

6. The method of claim 5, wherein a status change of a print file is reported, by a printer in which a said status change takes place, to the print service, and wherein the print service communicates the reported status change to the printers that have the associated metadata.

7. The method of claim 5, further including updating the local print selection mechanisms of the printers in accordance with reported status changes of print files.

8. The method of claim 5, wherein status changes include starting a print process for a copy of the print file, finishing a print process for a copy of the print file, deleting the print file, and changing of the required number of copies by an operator by means of the operator control unit of a printer.

9. The method of claim 1, further including maintaining, by the print service, a list of all print files in the system, including the metadata of said files.

**10.** A method according to any one of the preceding claims,
wherein said print service is implemented as a server connected to the network.

**11.** A method according to any one of claims 1 to 9,
wherein each connected printer is provided with a server process that is logically connected to the server processes in the other printers, and wherein the server processes together form a distributed print service.

**12.** A method according to claim 1, wherein a print file for coordinated concurrent processing in at least two printers includes a metadata item identifying it as such.

**13.** A printing system for printing digital print files,
wherein a digital print file includes print image data and metadata specifying job information such as required number of copies to be printed,
the system comprising:

- a plurality of printers, each being provided with a local memory, a local control unit provided with inputting means and a display and including a file selection mechanism, adapted for interactive printing, i.e. printing a print file only upon selection thereof and entering of a print command through the operator control unit,
- a print service being adapted to receive print files, to store them in a storage and to distribute information on the stored print files, including metadata, to a plurality of the printers, and
- a network for interconnecting the printers, the print service and one or more personal workstations,

    **characterized in that**
the print service is adapted to permit starting a print process for a first print file in one of the printers and, while said print process is active, starting an interactive print process for the first print file in another one of the printers,
and **in that** the print service is adapted to control the printers processing said first print file to together print a total number of copies of the first print file, that is equal to the required number of copies specified in the metadata of said print file.

**14.** The system according to claim 13, wherein said print service includes:

- a reception module for receiving a print file;
- a storage for storing said print file;
- an extraction module for extracting at least part of the metadata of said print file; and
- a transmission module for transmitting said extracted metadata to a plurality of the printers.

**15.** The system according to claim 13,
wherein the control unit of a printer includes a communication module for

- reporting the finishing of each copy of a print file to the print service and
- obtaining permission from the print service for starting printing of each new copy of said print file.

**16.** The system of claim 13, wherein the printer further comprises

- a fetch module for fetching print data of a print file selected by an operator at a printer, from the storage.

**17.** The system of claim 13, wherein the print service further includes

- a communication unit for communicating status changes of a print file to all printers which have the associated metadata.

**18.** The system of claim 17, wherein status changes include starting a print process for a copy of the print file, finishing a print process for a copy of the print file, deleting the print file, and changing of the required number of copies by an operator by means of the operator control unit of a printer.

**19.** A system according to any one of the claims 13 to 18,
wherein said print service is implemented as a server connected to the network.

**20.** A system according to any one of claims 13 to 18,
wherein each connected printer is provided with a server process that is logically connected to the server processes in the other printers, and wherein the server processes together form a distributed print service.

**21.** A computer program for executing the method as claimed in any one of claims 1 to 12, when run in a computer.

**22.** A computer program product according to claim 21, stored on a machine-readable medium.

FIG. 1

# FIG. 2

10    UPS

accounting & security    33

31    34

job list

VPS    UPServer

32    35

device info

time    36

## FIG. 3

---

Océ 3165...1-pc12-dac\dac    ? ✕

| Main | Layout | Quality | Output |

250  Copies  [55] ▲▼    ☐ To mailbox    275

230

210  ┌─ 1-sided or 2-sided ─────────┐   ┌─ Staple ─────────────┐
     ○ As in document              ○ As in document
     ⊙ 1-sided                     ⊙ No staple
     ○ 2-sided                     ○ Staple

220  ┌─ Covers ─────────────────────┐   ┌─ Paper source ───────┐
     ☐ Front                        ○ Special feeder
     ☐ Back                         ⊙ Paper tray    240

Océ    [Automatic  ▼]

[ About ]    [ Default ]

[ OK ]  [ Cancel ]  [ Apply ]  [ Help ]

270

## Fig. 6

**FIG. 4**

67   60   65 A   65 B   65 C   65 D

Ready to print

| Basic settings | Paper settings | Extra settings | Mailbox |

66

Scan   Dixon
Print   Evertsen
Copy   Smith

original   user   show document

64 A   64 B   64 C   64 D   64 E

70   68   63

1 2 3 4 5 6 7 8 9 0   C

61   62

EP 1 394 671 A1

EP 1 394 671 A1

**Ready to print**
user: Evertsen
document: INTERNAL REPORT

| Basic settings | Paper settings | Extra settings | Mailbox |

| Scan | Dixon | INTERNAL REPORT | 14:20 |
| Print | Evertsen | ANALYSIS | 13:02 |
| Copy | Smith | ✓MINUTES | 11:43 |

| original | user | select all | select new | delete |

67  60  65 A  65 B  65 C  65 D

66

64 A  64 B  64 C  64 D  64 E

68

70

| 1 | 2 | 3 | 4 | 5 | 6 | 7 | 8 | 9 | 0 |

C

63

61  62

# FIG. 5

EP 1 394 671 A1

| | | | |
|---|---|---|---|
| 67 | 60 | 65 A  65 B  65 C  65 D | |

**Ready to print**
user: Evertsen
document: ANALYSIS

| Basic settings | Paper settings | Extra settings | Mailbox |
|---|---|---|---|

| Scan | Dixon | | | |
|---|---|---|---|---|
| Print | Evertsen | INTERNAL REPORT | 14:20 | |
| Copy | Smith | ANALYSIS | 13:02 | |
| | | MINUTES | 11:43 | |

original    user    abort    delete

66

64 A    64 B    64 C    64 D    64 E    68

**55**    70    63

◇    1  2  3  4  5  6  7  8  9  0    C

61    62

# FIG. 7

EP 1 394 671 A1

| Job is ACTIVE | Basic settings | Paper settings | Extra settings | Mailbox |

This job is currently printing at printer A1 (Océ 3165)

| Scan | Dixon | ✓INTERNAL REPORT | 14:20 |
| Print | Evertsen | ANALYSIS | 13:02 |
| Copy | Smith | ✓MINUTES | 11:43 |

original    user    abort    delete

**55**

| 1 | 2 | 3 | 4 | 5 | 6 | 7 | 8 | 9 | 0 |

C

## FIG. 8

**FIG. 9**

EP 1 394 671 A1

EP 1 394 671 A1

**Tandem Job - 15 of 55**
user: Evertsen
document: INTERNAL REPORT

| Basic settings | Paper settings | Extra settings | Mailbox |
|---|---|---|---|

| Scan | Dixon | ✓ INTERNAL REPORT | 14:20 |
| ● Print | Evertsen | ANALYSIS | 18:02 |
| Copy | Smith | ✓ MINUTES | 11:43 |
| original | user | abort | | delete |

67  60  65 A  65 B  65 C  65 D  66

64 A  64 B  64 C  64 D  64 E  68

55
70

| 1 | 2 | 3 | 4 | 5 | 6 | 7 | 8 | 9 | 0 |

C
63

61  62

# FIG. 10

Océ 316S-11-pc1X-dacldac ? X

Main | Layout | Quality | Output

Copies [55]   ☐ To mailbox   ○ **Normal job**
                                ● **Tandem job**

┌─ 1-sided or 2-sided ─────────┐  ┌─ Staple ─────────────┐
│ ○ As in document              │  │ ○ As in document      │
│ ⊙ 1-sided                     │  │ ⊙ No staple           │
│ ○ 2-sided                     │  │ ○ Staple              │
└───────────────────────────────┘  └───────────────────────┘

┌─ Covers ──────────────────────┐  ┌─ Paper source ────────┐
│ ☐ Front                       │  │ ○ Special feeder      │
│ ☐ Back                        │  │ ⊙ Paper tray          │
│                               │  │ [Automatic        ▼]  │
│         Océ                   │  └───────────────────────┘
└───────────────────────────────┘

                                    [ About ]    [ Default ]

         [ OK ]  [ Cancel ]  [ Apply ]  [ Help ]

**Fig. 11**

**Fig. 14**

```
┌─────────────────────┐
│ tandem job is started│
│ at console           │
└─────────┬────────────┘
          │              ┌──────────────────────┐
          ▼          ┌──►│ report copy finished  │◄──┐
    ◇───────────◇    │   └──────────────────────┘   │
   ╱ # finished  ╲   │           S7                  │
  ╱   copies      ╲ N│                               │
 ◇      <          ◇─┼──►┌──────┐  S2        ┌──────────────┐
  ╲ required #    ╱  │   │ exit │             │ print 1 copy │
   ╲  copies     ╱   │   └──────┘             └──────┬───────┘
    ╲    ?      ╱    │                          S5   ▲
     ◇────────◇      │                               │
    S1    │ Y        │                               │
          │  S3      │      ◇──────────◇   Y         │
          ▼          │     ╱            ╲────────────┘
┌──────────────────┐ │    ◇ permission   ◇
│ request permission│─┘    ╲  given     ╱
│ to start          │       ╲    ?     ╱
│ printing 1 copy   │        ◇────────◇
└───────────────────┘      S4    │ N
                                 │
```

20

EP 1 394 671 A1

67 60 65 A 65 B 65 C 65 D

**Ready to print**
This job is a tandem job

| Basic settings | Paper settings | Extra settings | Mailbox |

66

| Scan | Dixon | | |
|------|-------|---|---|
| ● Print | Eversen | ✓ INTERNAL REPORT | 14:20 |
| Copy | Smith | ANALYSIS | 13:02 |
| | | ✓ MINUTES | 11:43 |

original    user    abort    delete

64 A    64 B    64 C    64 D    64 E

68

55    70

| 1 | 2 | 3 | 4 | 5 | 6 | 7 | 8 | 9 | 0 |

C    63

61    62

# FIG. 12

FIG. 13

printer reports selection of tandem job at console

S10 — permission to start printing a copy requested ?  
N → withdraw permission — S17

Y

S11 — actual # permissions < required # copies ?  
N → deny permission — S13

Y

S12 — give permission

S16 — breakdown reported ?  
Y / N

S14 — all permitted copies finished ?  
N

Y

S15 — exit

## Fig. 15

---

printer reports change of R

S20 — update R

S21 — new R ≥ P ?  
N → withdraw MIN (P - F, P - R) permissions — S23

Y

S24 — select printers to be stopped and issue stop commands

S22 — exit

P = number of given permissions  
F = number of copies reported finished  
R = number of required copies

## Fig. 16

**European Patent Office**

## EUROPEAN SEARCH REPORT

Application Number

EP 03 07 7599

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2001/038462 A1 (STIPHOUT DUNCAN ANTOON HELENA ET AL) 8 November 2001 (2001-11-08) * the whole document * | 1-22 | G06F3/12 |

TECHNICAL FIELDS SEARCHED (Int.Cl.7)

G06F
H04N

The present search report has been drawn up for all claims

| Place of search | Date of completion of the search | Examiner |
|---|---|---|
| The Hague | 11 December 2003 | Weiss, P |

**ANNEX TO THE EUROPEAN SEARCH REPORT
ON EUROPEAN PATENT APPLICATION NO.**

EP 03 07 7599

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2003

| Patent document cited in search report | Publication date | Patent family member(s) | Publication date |
|---|---|---|---|
| US 2001038462 A1 | 08-11-2001 | NL 1008642 C2 | 23-09-1999 |
| | | AU 9516001 A | 06-06-2002 |
| | | CA 2362229 A1 | 05-06-2002 |
| | | EP 1215879 A2 | 19-06-2002 |
| | | EP 1229724 A2 | 07-08-2002 |
| | | JP 2002199153 A | 12-07-2002 |
| | | JP 2002236570 A | 23-08-2002 |
| | | US 2002027673 A1 | 07-03-2002 |
| | | EP 0944239 A1 | 22-09-1999 |
| | | EP 0949806 A2 | 13-10-1999 |
| | | JP 11331460 A | 30-11-1999 |
| | | JP 2000040032 A | 08-02-2000 |
| | | NL 1008896 C2 | 16-05-2000 |
| | | NL 1008896 A1 | 21-09-1999 |
| | | US 6463435 B1 | 08-10-2002 |
| | | US 6181893 B1 | 30-01-2001 |
| | | US 2001000027 A1 | 15-03-2001 |

EPO FORM P0459

For more details about this annex : see Official Journal of the European Patent Office, No. 12/82